# EUROPEAN PATENT APPLICATION

(11) **EP 0 852 370 A1**
(43) Date of publication of application: **08.07.1998**
(21) Application number: 97200032.7
(22) Date of filing: 07.01.1997
(51) Int. Cl.: G09F 19/22, E04F 15/02

(54) **Device intended for mounting in floors, which device is provided with a print**

(71) Applicant: Kuperus, Louis, 2133 CX Hoofddorp (NL); Gherels, Willem, 2141 EB Vijfhuizen (NL)
(72) Inventor: Kuperus, Louis, 2133 CX Hoofddorp (NL)
(74) Representative: Smulders, Theodorus A.H.J., Ir.

(57) **Abstract**

A device comprising a rigid plate part to which plate part a print has been applied, which print is protected at its top side by means of a transparent plastic layer having a bottom surface and a top surface, of which plastic layer the dimensions substantially correspond to the dimensions of the rigid plate part, the device comprising fastening means for anchoring the device in a floor so that the top surface substantially aligns with the floor surface.

## Description

The object relates to the problem of applying codes or marks and other logistic data to floors of, for instance, factory halls, storehouse halls, factory premises, and like floor surfaces. Today, such codes are provided by means of paint applied directly to the floor surface. In particular on floor surfaces involving much transportation of heavy loads, a rapid fouling and wear of the applied code occurs. Due to this wear and fouling, a paint-applied code on floor surfaces is soon no longer legible, as a consequence of which the code or marks have to be applied afresh. In particular in environments where liquids, forklift trucks and heavy loads are handled, this is a particularly great problem and the maintenance of the codes or marks on the floor surfaces forms a considerable cost item.

The object of the invention is to provide a solution to this problem by realizing an altogether new approach to the application of codes or marks to floor surfaces.

To this end, the invention provides a device comprising a rigid plate part to which plate part a print has been applied, which print has its top side protected by means of a transparent plastic layer having a bottom surface and a top surface, of which plastic layer the dimensions substantially correspond to the dimensions of the rigid plate part, the device comprising fastening means for anchoring the device in a floor, so that the top surface substantially aligns with the floor surface.

Hence, such a device is disposed in a floor and connected thereto by means of the fastening means. The rigid plate part with print, which print is protected by means of the transparent plastic layer, forms a part of the floor surface over which forklift trucks or like vehicles can drive without causing damages. Owing to the plastic layer, the print remains unaffected and the rigidity of the plate part provides a firm base offering sufficient support to vehicles or loads positioned on the device.

In accordance with a further elaboration of the invention, the plate part with print and plastic layer can be connected, via spring means, to the fastening means so as to be slidable in a direction perpendicular to the top surface, while in an unloaded condition of the plate part, the top surface of the plastic layer aligns with the floor surface, and in a loaded condition of the plate part, the plate part is moved downwards against the spring pressure of the spring means.

With such a construction, it is possible to drive over the device with a very heavy load without this load bearing entirely on the plate part. After all, under the influence of the load, the plate part is pressed down until, for instance, the wheel of the forklift truck comes to bear on the edges of the opening in the floor in which the device according to the invention is accommodated. Essentially, in that condition, the wheel does not bear on the plate part, but on the edges of the opening in the floor in which the device is accommodated. Moreover, such a resilient construction has the advantage that a heavy load falling on the plate part does not result in breaking of the transparent plastic layer or other considerable damages of the plate part whereby the legibility of the code or the marks could be negatively affected.

In accordance with an alternative further elaboration of the invention, for applications involving the handling of less heavy loads and involving slightly more favorable conditions, the plate part with print and plastic layer can be fixedly connected to the fastening means. Such a construction offers the advantage that it can be manufactured in a cheap manner while it provides a highly durable coding in floor surfaces all the same.

Further elaborations of the invention are described in the subclaims and will hereinafter be further explained on the basis of three exemplary embodiments, with reference to the accompanying drawings. In these drawings:
Fig. 1 is a sectional view of a first exemplary embodiment of the device;
Fig. 2 is a top plan view of the device shown in section in Fig. 1;
Fig. 3 is a bottom view of the device shown in section in Fig. 1;
Fig. 4 is a sectional view of a second embodiment of a device according to the invention; and
Fig. 5 is a similar sectional view of a third embodiment of the device according to the invention.

All exemplary embodiments comprise a rigid plate part 1 on which plate part a print 2 has been provided. The print 2 has its top side protected by means of a transparent plastic layer 3 having a bottom surface 3a and a top surface 3b. The dimensions of the plastic layer 3 substantially correspond to the dimensions of the rigid plate part 1. All exemplary embodiments shown of the device are moreover provided with fastening means 4 for anchoring the device in a floor 5, so that the top surface 3b substantially aligns with the floor surface 5a.

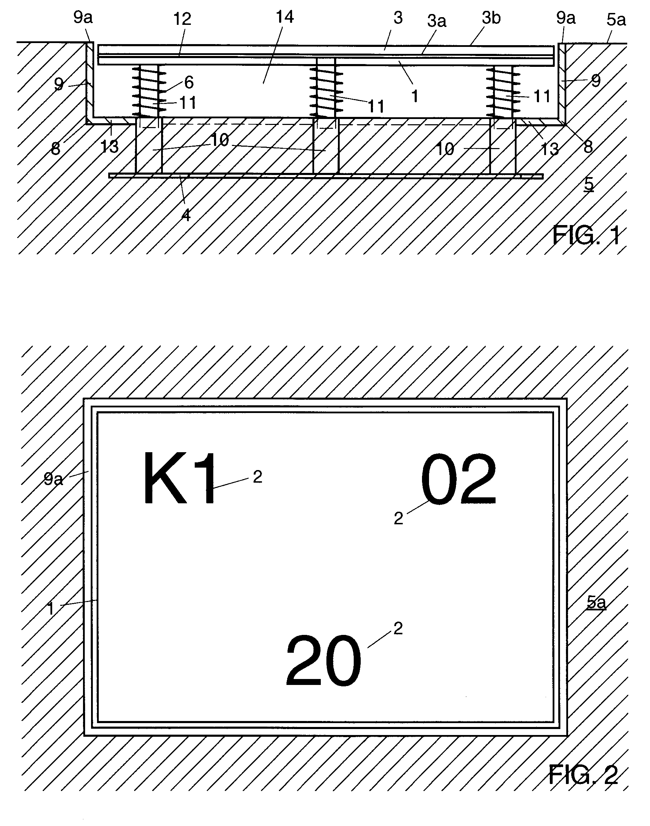

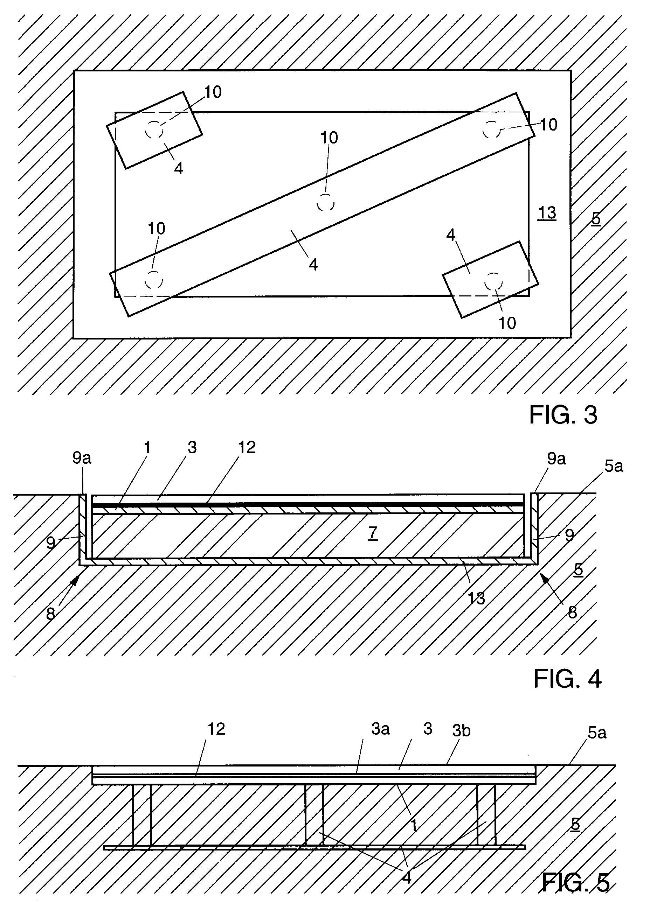

In the exemplary embodiment shown in Figs. 1-3, the plate part 1 with print 2 and plastic layer 3 is connected, via springs means, in particular helical springs 6, to the fastening means 4 so as to be slidable in a direction perpendicular to the top surface 3b. In unloaded condition of the plate part 1, the top surface 3b aligns with the floor surface 5a. In a loaded condition of the plate part 1, the plate part 1 is moved downwards against the spring pressure of the spring means 6. A loaded condition occurs for instance when a forklift truck or a like load bears on the plate part 1. To prevent for instance a wheel of a vehicle that bears on the device from depressing the spring means 6 entirely, it is particularly favorable when the fastening means 4 also comprise a housing part 8, which housing part 8 comprises a number of sidewalls 9 which extend perpendicularly to the top surface 3b and form a circumferential boundary of the housing. The sidewalls 9 bound an inner space 14 whose shape and dimensions substantially correspond to the dimensions of the plate part 1. To prevent the plate part 9 from being pressed against the sidewalls 9 upon depression of the spring means 6, it is particularly favorable if the fastening means 4 as well as the plate part 1 comprise guide means 10, 11, cooperating with one another so that the plate part 1 can only make a movement directed perpendicularly to the top surface 3b. Preferably, in mounted condition of the device, the top edges 9a of the sidewalls 9 substantially align with the floor surface 5a. After the plate part 1 has been pressed down by the gravitational force of, for instance, a forklift truck, the wheel of the truck bearing on the device essentially bears on the top edges 9a of the sidewalls 9 of the housing 8 of the device. Without the presence of these sidewalls 9, a device provided with a spring-mounted construction involves the possibility that in course of time, the opening edges of the opening in the floor surface 5a, which edges bound the plate part 1, chip off, which results in holes in the floor surface 5a.

In the exemplary embodiment shown in Figs. 1-3, the guide means forming part of the fastening means 10 and fixedly connected thereto are constructed as tubular elements 10. The guide means 11 forming part of the plate part 1 and fixedly connected thereto are constructed as pins 11. The pins 11 are slidably receivable in the tubular elements 10. As observed hereinabove, the spring means 6 are constructed as helical springs, each being positioned over a pin 11. Each helical spring abuts by a first end face thereof against a bottom surface of the plate part 1 and by a second end face thereof against an upwardly directed end face of the relevant tubular element 10 or against a flange or a like abutting face provided on the tubular element 10.

Fig. 4 shows a second exemplary embodiment, the spring means 7 being constructed as a relatively thick plate of resilient material 7. The resilient material 7 can for instance be rubber or a flexible plastic. The dimensions of the plate of resilient material 7 substantially correspond to the dimensions of the plate part 1. A bottom surface of the plate part 1 is connected to a top surface of the plate of resilient material 7. The plate of resilient material 7 is accommodated in a housing 8 having sidewalls 9 extending perpendicularly to the plate part 1 and bottom walls 13. In the exemplary embodiment shown, the fastening means only comprise the housing 8. However, it is a matter of fact that fastening means in the form of fastening anchors may be provided that are fixedly connected to the housing 8. In the mounted condition of the device, the top edges 9a of the sidewalls 9 substantially align with the floor surface 5a.

The exemplary embodiment shown in Fig. 5 is particularly intended for applications where the floor surface 5a is loaded to a slight degree only. Under some circumstances, it is then still not possible to provide the codes or marks on the floor in paint. These circumstances for instance occur when the floor surface 5a often becomes wet, while in particular more aggressive liquids can damage codes or marks provided in paint. The exemplary embodiment shown in Fig. 5 does not comprise spring means. In this embodiment, the plate part 1 with print 2 and plastic layer 3 is fixedly connected to the fastening means 4.

Preferably, the plate part 1 is manufactured from corrosion-free metal and the plastic layer 3 is manufactured from a plate of polycarbonate. The print is preferably applied to a readily printable material 12 such as paper or plastic film. The plate part 1, the printed material 12 and the plate of polycarbonate 3 are preferably interconnected by adhesive, with at least the adhesive located between the plate of polycarbonate 3 and the printed material 12 being substantially transparent. If necessary, the top surface 3b of the polycarbonate plate 3 can be provided with a silicone layer to increase the scratch resistance of the polycarbonate plate 3. Moreover, it is possible to provide the top surface 3b of the polycarbonate plate 3 with an antistatic layer that can be applied by means of an antistatic spray or antistatic, transparent film. This offers the advantage that dirt and dust hardly adhere to the polycarbonate 3.

The device according to the invention is in particular suitable for being cast into a concrete floor. However, mounting in other types of floors is also possible without any trouble. The attachment will then have to be effected by means of conventional fastening means, such as screws, glue or the like.

It is understood that the invention is not limited to the exemplary embodiments described, but that various modifications are possible within the framework of the invention. For instance, the plate part 1 can have a circular circumference rather than a rectangular one, which simplifies the provision of a hole in an existing floor surface due to the fact that it can be carried out by means of a hole drill. Hence, a circular embodiment offers the advantage of a quicker and simpler assembly.

## Claims

1. A device comprising a rigid plate part to which plate part (1) a print (2) has been applied, said print (2) being protected at its top side by means of a transparent plastic layer (3) having a bottom surface (3a) and a top surface (3b), the dimensions of said plastic layer (3) substantially corresponding to the dimensions of the rigid plate part (1), wherein the device comprises fastening means (4,8) for anchoring the device in a floor (5) so that the top surface (3b) substantially aligns with the floor surface (5a).

2. A device according to claim 1, characterized in that the plate part (1) with print (2) and plastic layer (3) are connected, via spring means (6,7), to the fastening means (4,8) so as to be slidable in a direction perpendicular to the top surface (3b), wherein, in an unloaded condition of the plate part (1), the top surface (3b) of the plastic layer (3) aligns with the floor surface (5a), and wherein, in a loaded condition of the plate part (1), the plate part (1) is moved downwards against the spring pressure of the spring means (6,7).

3. A device according to claim 2, characterized in that the fastening means (4,8) comprise a housing part (8), said housing part (8) comprising a number of sidewalls (9) which extend perpendicularly to the top surface (3b) and form a circumferential boundary of the housing (8), wherein the sidewalls (9) bound an inner space (14) whose shape and dimensions substantially correspond to the dimensions of the plate part (1), wherein the fastening means (4,8) as well as the plate part (1) comprise guide means (10,11) cooperating with one another so that the plate part (1) can only make a movement directed perpendicularly to the top surface (3b), wherein, in mounted condition of the device, the top edges (9a) of the sidewalls (9) substantially align with the floor surface (5a).

4. A device according to claim 3, characterized in that the guide means (11) which form part of the fastening means (4,8) and are fixedly connected thereto are constructed as tubular elements (10) and that the guide means (11) which form part of the plate part (1) and are fixedly connected thereto are constructed as pins (11) or vice versa, wherein the pins (11) are slidably receivable in the tubular elements (10), wherein the spring elements (6) are constructed as helical springs (6) positioned over a pin (11), wherein each helical spring (6) abuts by a first end face thereof against a bottom surface of the plate part (1) and abuts by a second end face thereof against an upwardly directed end face of the relevant tubular element (10) or against a flange or a like abutting face provided on the tubular element (10).

5. A device according to claim 2, characterized in that the spring means (7) are constructed as a relatively thick plate of resilient material (7), such as, for instance, rubber or flexible plastic, wherein the dimensions of the plate of resilient material (7) substantially correspond to the dimensions of the plate part (1), wherein a bottom surface of the plate part (1) is connected to a top surface of the plate of resilient material (7), wherein the plate of resilient material (7) is accommodated in a housing (8) having sidewalls (9) extending perpendicularly to the plate part (1) and bottom walls (13), wherein, in mounted condition of the device, the top edges (9a) of the sidewalls (9) substantially align with the floor surface (5a).

6. A device according to claim 1, characterized in that the plate part (1) with print and plastic layer (3) is fixedly connected to the fastening means (4).

7. A device according to any one of the preceding claims, characterized in that the plate part (1) is manufactured from corrosion-free metal, wherein the plastic layer (3) is manufactured from a plate of polycarbonate, wherein the print is applied to a readily printable material (12), such as paper or plastic film, wherein the plate part (1), the printed material (12) and the plate of polycarbonate (3) are interconnected by means of adhesive, wherein at least the adhesive located between the plate of polycarbonate (3) and the printed material (12) is substantially transparent.

8. A device according to claim 7, characterized in that the top surface (3b) of the polycarbonate plate (3) is provided with a silicone layer to increase the scratch resistance.

9. A device according to claim 7 or 8, characterized in that the top surface (3b) of the polycarbonate plate (3) is provided with an antistatic layer.
